# EUROPÄISCHE PATENTSCHRIFT

(11) **EP 3 132 673 B1**
(45) Veröffentlichungstag und Bekanntmachung des Hinweises auf die Patenterteilung: **14.11.2018**
(21) Anmeldenummer: 16182776.1
(22) Anmeldetag: 04.08.2016
(51) Int. Cl.: A01F 15/07

(54) **HÜLLMATERIALMAGAZIN UND ERNTEBERGUNGSGERÄT**
CLADDING MATERIAL MAGAZINE AND HARVEST COLLECTION DEVICE
CHARGEUR DE MATERIAU D'EMBALLAGE ET APPAREIL DE RECUPERATION DE CUEILLETTE

(30) Priorität: 20.08.2015 DE 102015215899
(43) Veröffentlichungstag der Anmeldung: 22.02.2017
(73) Patentinhaber: Deere & Company, Moline, IL 61265 (US)
(72) Erfinder: Guerin, Sebastien, 25000 Besancon (FR); Chapon, Emmanuel, 70100 Velet (FR)
(74) Vertreter: Reichert, Christian

(56) Entgegenhaltungen:
- EP-A1- 1 077 024
- EP-A1- 1 602 269
- DE-A1- 10 114 577
- DE-T2- 69 902 673

## Beschreibung

Die vorliegende Erfindung betrifft eine landwirtschaftliche oder industrielle Presse zur Herstellung von Rundballen mit einer an die Presse in einem rückwärtigen Bereich anschließbaren Ballenwickeleinrichtung mit Wickelarmen zum Umhüllen eines Ballens mit Hüllmaterial, mit wenigstens einem Hüllmaterialmagazin, zur Mitführung eines Hüllmaterialvorrats an der landwirtschaftlichen oder industriellen Presse, wobei das Hüllmaterialmagazin einen an die Presse schwenkbar anbringbaren Träger umfasst, mit wenigstens einer Hüllmaterialaufnahmeeinrichtung zur Aufnahme wenigstens eines Hüllmaterialvorrats in der Art einer Rolle.

Bekannte Hüllmaterialmagazine werden häufig an Erntebergungsgeräten eingesetzt, wo sie zur Aufnahme und Mitführung von Hüllmaterialvorräten, beispielsweise in der Art von Rollen aus Folien- oder auch Netzmaterial dienen. Bei derartigen Erntebergungsgeräten handelt es sich häufig um Pressen, welche sowohl im landwirtschaftlichen als auch im industriellen Bereich eingesetzt werden. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Nach der Bildung eines Ballens wird dieser in ein Folien- oder Netzmaterial eingehüllt, wozu eine sogenannte Ballenwickeleinrichtung zum Einsatz kommt, welche an das Erntebergungsgerät angeschlossen werden oder auch einen integralen, festen oder lösbaren Bestandteil des Erntebergungsgeräts, einer Presse oder einer Presse-/Wickelkombination, insbesondere in der Art einer sogenannten Kombipresse bilden kann. Aber auch an reinen Ballenwickelgeräten, welche unabhängig von einem Erntebergungsgerät zum Einsatz kommen können, können Hüllmaterialmagazine vorgesehen sein.

In DE 699 02 673 T2 wird eine Ballenwickeleinrichtung zum Umwickeln eines Rundballens offenbart. Die Ballenwickeleirichtung umfasst einen auf einem Rahmen der Ballenwickeleinrichtung stationär angeordneten Rollenhalter zum Tragen mehrerer austauschbarer Rollen mit Hüllmaterial zum Umwickeln des Ballens, wobei der Ballen durch Rotation um sich selbst bei stationärem Rollenhalter mit dem Hüllmaterial umwickelt wird. Der Halter weist ein Gestell auf, von dem sich untere und obere Lagerzapfen erstrecken, zwischen denen die austauschbaren Rollen drehbar eingespannt werden. Um einen Austausch einer aufgebrauchten Rolle zu erleichtern, ist das Gestell aus einer senkrechten Position in eine aus der Senkrechten herausgeschwenkte Position verschwenkbar. Die hier offenbarte technische Lehre bezieht sich auf Ballenwickeleinrichtungen mit stationären Hüllmaterialrollen und ist für Ballenwickeleinrichtungen mit rotierenden Hüllmaterialrollen bzw. mit um den Ballen rotierenden und die Hüllmaterialrollen tragenden Wickelarmen ungeeignet.

Hüllmaterialmagazine dienen üblicherweise dazu, Hüllmaterialvorräte während des Transport-, Fahr- bzw. Erntebetriebs des Erntebergungsgeräts mitzuführen und vorzugsweise derart zu bewahren, dass sie vorzugsweise nicht oder nur wenig in den Funktionsbereich des Erntebergungsgeräts hineinragen bzw. eine Funktion der Presse nicht behindern und darüber hinaus vor Umwelteinflüssen und Beschädigungen weitestgehend geschützt werden können, gleichzeitig aber bei Bedarf einen Zugriff einer Bedienungsperson auf die Hüllmaterialvorräte ermöglichen. Es ist bekannt, Hüllmaterialmagazine in Seitenbereichen eines Erntebergungsgeräts in erhöhter Position vorzusehen und diese zur Entnahme der Hüllmaterialvorräte in eine sich von dem Erntebergungsgerät nach seitwärts erstreckende Stellung zu bringen, in denen die Hüllmaterialvorräte durch eine Bedienungsperson entnommen werden können. Im Anschluss müssen die üblicherweise schweren und unhandlichen Hüllmaterialvorräte von der Bedienungsperson von dem Entnahmeort zu ihrem Einsatzort gebracht werden, welcher sich üblicherweise in einem rückwärtigen Bereich des Erntebergungsgeräts befindet.
So wird beispielsweise in EP 1 077 024 A1 eine landwirtschaftliche Funktionseinheit offenbart, mit einer Ballenpresse, die mit ihrem Rahmen auf einem Fahrwerk angeordnet ist und mit einem Wickler, der in vorbestimmter Zuordnung zur Ballenpresse an deren Ballenauswurfseite vom selben Fahrwerk getragen wird. Der Wickler ist hierbei als von der Ballenpresse abkoppelbarer Huckepack-Wickler ausgebildet und weist eine Wickelstation mit um einen Ballen rotierenden Wickelarmen auf. Seitlich der Ballenpresse sind Hüllmaterialmagazine angeordnet, die mit mehreren Hüllmaterialrollen befüllbar sind. Die Hüllmaterialmagazine sind in einer Transportstellung geschlossen gehalten und können durch Verschwenken um eine vertikale Schwenkachse aus einer geschlossen Transportstellung in eine Entnahmestellung verschwenkt werden, in der die im Hüllmaterialmagazin deponierten Hüllmaterialrollen zum Austausch der aufgebrauchten Rollen bzw. zum Bestücken der Wickelarme mit neuem Hüllmaterialrollen zugänglich sind. Nachteilig ist, dass der Weg vom Hüllmaterialmagazin zu den Wickelarmen relativ weit ist, was den Austausch der Hüllmaterialrollen erschwert.
Dies ist für die Bedienungsperson anstrengend und im Laufe eines Arbeitstags ermüdend. Die der Erfindung zugrunde liegende Aufgabe wird darin gesehen, ein Hüllmaterialmagazin bzw. ein Erntebergungsgerät der eingangs genannten Art anzugeben, durch welche die vorgenannten Nachteile überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Ein Hüllmaterialmagazin zur Mitführung eines Hüllmaterialvorrats an einer landwirtschaftlichen oder industriellen Presse zur Herstellung von Rundballen mit einer an die Presse in einem rückwärtigen Bereich anschließbaren Ballenwickeleinrichtung zum Umhüllen eine Ballens mit Hüllmaterial, weist einen an das Erntebergungsgerät schwenkbar anbringbaren Träger mit wenigstens einer Hüllmaterialaufnahmeeinrichtung zur Aufnahme wenigstens eines Hüllmaterialvorrats, in der Art einer Rolle auf. Ist der Träger derart ausgebildet, dass die Hüllmaterialaufnahmeeinrichtung aus einer zumindest im wesentlichen vertikal ausgerichteten und der Ballenwickeleinrichtung abgelegenen Transportposition in eine an die Ballenwickeleinrichtung angrenzende Entnahmeposition gebracht werden kann, so kann dies die Entnahme des Hüllmaterialvorrats für eine Bedienungsperson vereinfachen, insbesondere da diese den Hüllmaterialvorrat nur noch über eine kürzere Distanz zu ihrem Einsatzort transportieren muss.
Besonders günstig ist es, wenn die Hüllmaterialaufnahmeeinrichtung in der Entnahmeposition zumindest annähernd horizontal und/oder annähernd, vorzugsweise aber nicht vollständig parallel zu einer Längsachse des Erntebergungsgeräts angeordnet ist. Auf diese Weise ist sie für die Bedienungsperson gut zugänglich. Darüber hinaus kann dies ein Entnehmen eines Hüllmaterialvorrats weiter erleichtern, beispielsweise in der Art, dass ein insbesondere als Rolle ausgebildeter Hüllmaterialvorrat von einer Bedienungsperson beispielsweise mit beiden Armen aufgenommen werden kann.
Ist der Träger in der Transportposition in einer erhöhten Position, vorzugsweise zumindest im Wesentlichen oberhalb eines Radkastens des Erntebergungsgeräts und/oder in einem Seitenbereich des Erntebergungsgeräts angeordnet, so ergibt sich während des eigentlichen Betriebs des Erntebergungsgeräts zumindest im Wesentlichen keine Einflussnahme zwischen dem Erntebergungsgerät und dem Hüllmaterialvorrat. Darüber hinaus kann der Hüllmaterialvorrat geschützt
vor Verschmutzungen bzw. Beschädigungen mitgeführt werden.

Ist der Träger in der Transportstellung zumindest im Wesentlichen parallel zu der Längsachse des Erntebergungsgeräts angeordnet, so nimmt er bezogen auf das Erntebergungsgerät einen möglichst geringen Bauraum ein und ist möglichst geschützt angeordnet.

Besonders günstig ist es, wenn der Träger ausgebildet ist, um um eine nicht vertikale Drehachsachse zu verschwenken und vorzugsweise wenigstens ein zumindest im Wesentlichen eine nicht vertikal ausgerichtete Drehachse aufweisendes Drehgelenk zur Anbringung an der Presse aufweist. Auf diese Weise kann der Träger bzw. des Hüllmaterialmagazin während des Verschwenkens einen Bogen beschreiben, der ihn bzw. es um andere Bauteile, insbesondere den Radkasten des Erntebergungsgeräts herumführen kann. Vorzugweise weist der Träger darüber hinaus eine Grundplatte zur Aufnahme der sich von der Grundplatte zumindest im Wesentlichen senkrecht erstreckenden Hüllmaterialaufnahmeeinrichtung und einen Lenker zur Verbindung der Grundplatte mit dem Drehgelenk auf, wobei der Lenker mit der Grundplatte vorzugsweise einen Winkel größer als 90° einschließt.

Um das Schwenken bzw. die Führung des Trägers bzw. der Grundplatte weiter zu verbessern, kann die Drehachse mit der Vertikalen bzw. der Horizontalen einen Winkel kleiner als 90° einschließen und/oder sich vorzugsweise bezogen auf das Erntebergungsgerät zumindest im Wesentlichen nach rückwärts erstrecken.

Insbesondere kann ein Erntebergungsgerät mit wenigstens einem Hüllmaterialmagazin ausgestattet sein. Bei einem solchen Erntebergungsgerät handelt es sich vorzugsweise um eine landwirtschaftliche oder industrielle Presse zur Herstellung von Rundballen mit einer an das Erntebergungsgerät in einem rückwärtigen Bereich anschließbaren Ballenwickeleinrichtung zum Umhüllen eines Ballens mit Hüllmaterial. Es ist aber auch denkbar, von einer Ballenpresse unabhängig arbeitende oder an eine solche angehängte Ballenwickelgeräte mit wenigstens einem Hüllmaterialmagazin zu versehen.

Der Träger kann dabei in einfacher Weise an einem vorzugsweise bezogen auf das Erntebergungsgerät nach rückwärts und unten abgeschrägten Endbereich eines Gehäusebestandteils, vorzugsweise eines Radkastens des Erntebergungsgeräts anbringbar sein.

Ist die Drehachse mit Bezug auf den abgeschrägten Endbereich zumindest im Wesentlichen senkrecht angeordnet, so ermöglicht dies ein Verschwenken des Trägers bzw. des Hüllmaterialmagazins entlang eines Kreisbogens.

Sind zwei Hüllmaterialmagazine vorgesehen, die vorzugsweise im Wesentlichen achssymmetrisch zu einer/der Längsachse des Erntebergungsgeräts angeordnet sind, so vergrößert dies den für Hüllmaterialvorräte zur Verfügung stehende Raum. Erntebergungsgeräte weisen häufig Ballenwickeleinrichtungen mit zwei in etwa gegenüberliegenden Aufnahmearmen für Hüllmaterialvorräte auf, so dass die Hüllmaterialvorräte im Falle eines Vorsehens von zwei Hüllmaterialmagazinen gleichzeitig an beide Aufnahmearme angrenzend herangebracht werden können.
Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.
Es zeigt:
- Fig. 1a: ein Erntebergungsgerät in schematischer Darstellung mit einer nachgeordneten Ballenwickeleinrichtung und einem Hüllmaterialmagazin in einer Transport-, Fahrt- bzw. Betriebsstellung,
- Fig. 1b: eine Ansicht entsprechend Figur 1a, wobei das Hüllmaterialmagazin in einer Entnahmestellung gezeigt wird,
- Fig. 2: eine vereinfachte Darstellung des Erntebergungsgeräts gemäß Figur 1a bzw. 1b von oben betrachtet mit zwei Hüllmaterialmagazinen und
- Fig. 3: eine perspektivische und vergrößerte Darstellung eines der Hüllmaterialmagazine.

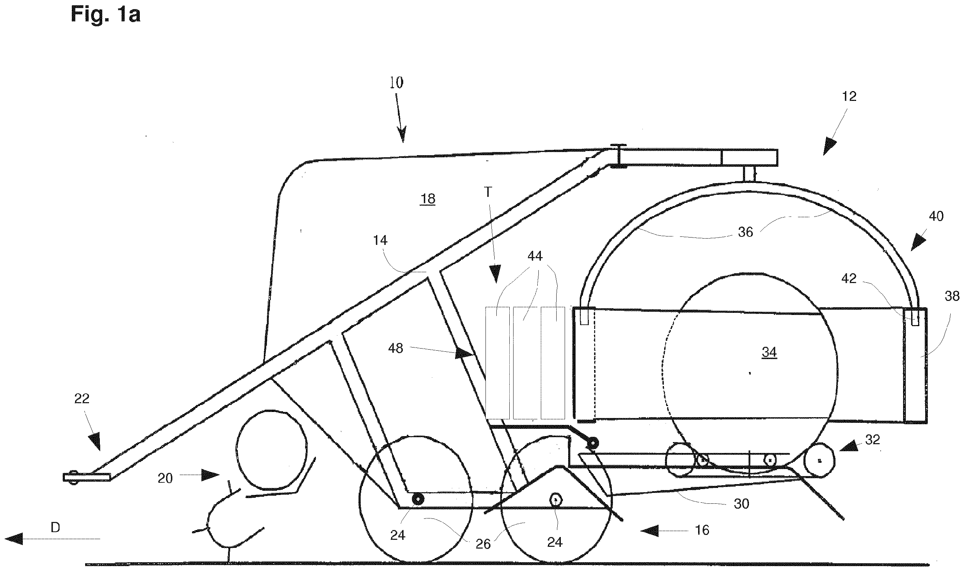

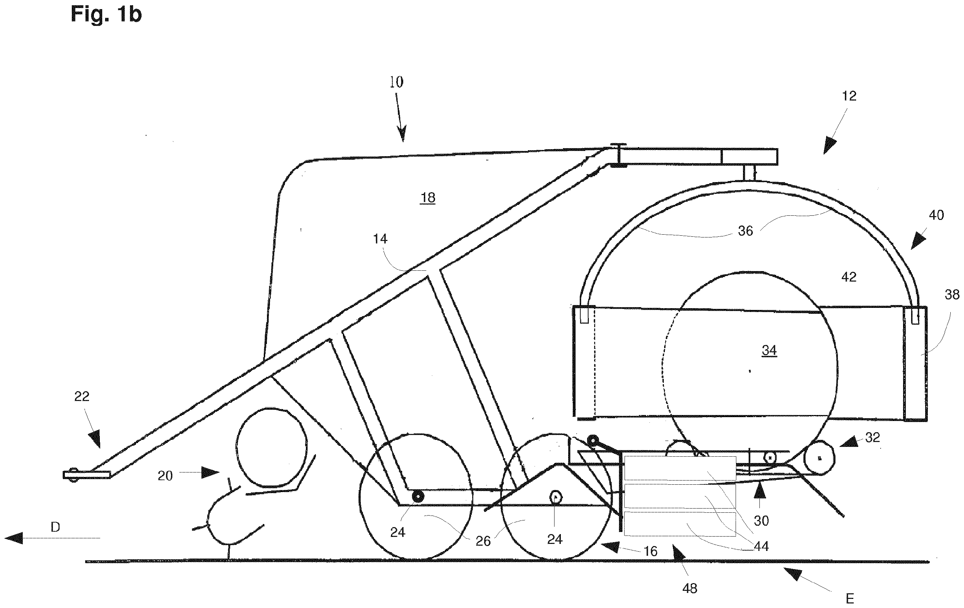

Die Figuren 1a und 1b zeigen ein Erntebergungsgerät 10 in der Art einer als Rundballenpresse ausgebildeten Presse mit einer nachgeordneten Ballenwickeleinrichtung 12. Das Erntebergungsgerät 10 weist im gezeigten Ausführungsbeispiel einen Rahmen 14, ein Fahrgestell 16, einen Pressraum 18 und eine Zufuhrvorrichtung 20 auf. Weiter ist eine Deichsel 22 vorgesehen, mittels der das Erntebergungsgerät 10 an ein nicht gezeigtes Zugfahrzeug, wie beispielsweise eine landwirtschaftliche Arbeitsmaschine bzw. einen Ackerschlepper anhängbar ist. Das Erntebergungsgerät 10 kann grundsätzlich von jeder herkömmlichen Bauart sein. Gemäß der Figuren handelt es sich bei dem Erntebergungsgerät 10 um eine Rundballenpresse. Eine solche kann beispielsweise einen festen oder variablen Pressraum aufweisen, und sowohl in der Landwirtschaft als auch im industriellen Bereich eingesetzt werden. Vorzugsweise ist die Presse 10 von der Bauart gemäß der deutschen Patentanmeldung 101 53 540.6. Der Rahmen 14 wird von einem Schweiß- und/oder Schraubzusammenbau gebildet und stützt sich mittels des Fahrgestells 16 auf dem Untergrund ab. Das Fahrgestell 16 ist in der Zeichnung in Tandemachsbauweise mit zwei Achsen 24 dargestellt, von denen jede an jeder Seite mit einem Rad 26 versehen ist. Auch eine Ausgestaltung mit nur einer Achse oder eine Abstützung mittels Raupen oder anderer geeigneter Mittel ist denkbar. Oberhalb der Räder ist eine Radabdeckung 28 vorgesehen.

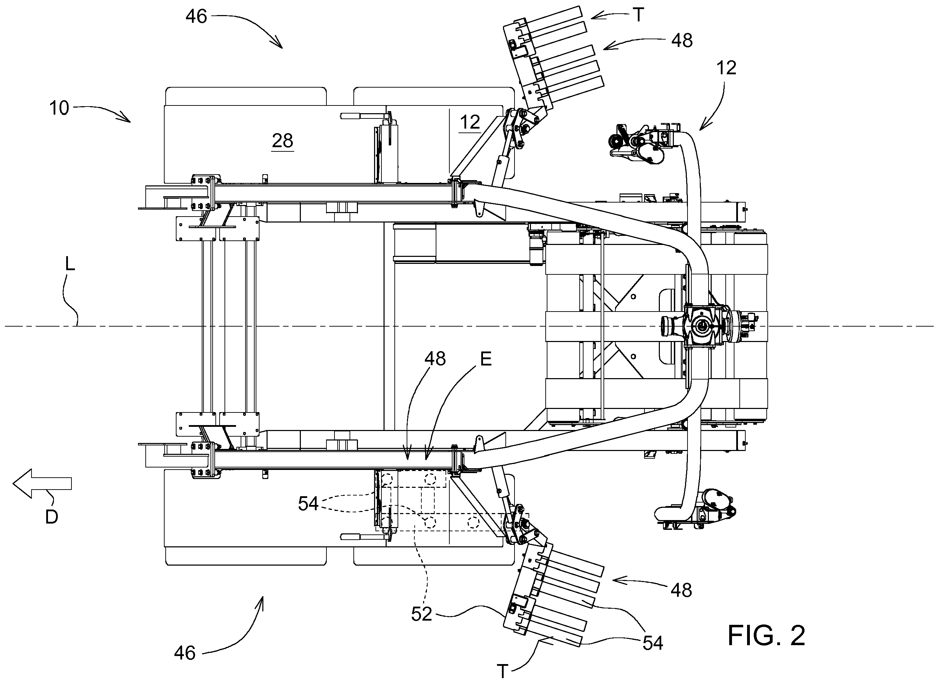

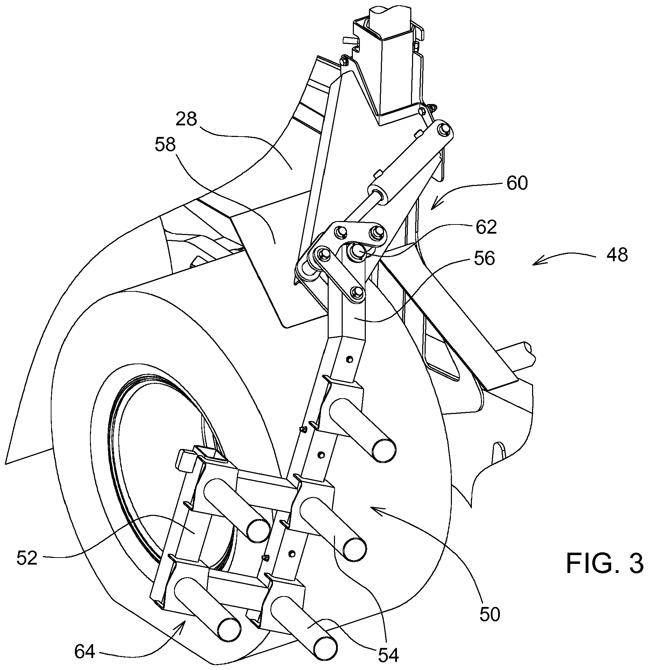

Die Ballenwickeleinrichtung 12 weist einen Rahmen 30, einen Wickeltisch bzw. eine Aufnahmevorrichtung 32, zur Aufnahme des zu umhüllenden Ballens 34, sowie Wickelarme 36 auf, die zur Umhüllung des Ballens 34 mit einem Hüllmaterial 38, beispielsweise einer Folie, mittels eines nicht gezeigten, geeigneten Antriebs in Bewegung versetzt werden können. Die Wickelarme 34 weisen in ihren Endbereichen 40 Hüllmaterialträger 42 zur Aufnahme eines Hüllmaterialvorrats 44, beispielsweise in der Art von Rollen, auf.
Allgemein wird im Betrieb ein Ballen 34 von dem Erntebergungsgerät 10 nach Abschluss des Pressvorgangs abgegeben und an die Ballenwickeleinrichtung 12 mittels bekannter, nicht näher dargestellter Mittel übergeben. Nach Aufnahme des Ballens 34 durch die Aufnahmeeinrichtung 32 wird der Ballen 34 mittels der Wickelarme 36 mit Hüllmaterial 38 umhüllt.
In Seitenbereichen 46 des Erntebergungsgeräts 10 sind links und rechts des Pressraums 18 Hüllmaterialmagazine 48 vorgesehen, wobei in den Figuren 1a und 1b nur das bezogen auf die übliche Fahrtrichtung D des Erntebergungsgeräts 10 linksseitige Hüllmaterialmagazin 48 dargestellt wird, wobei das Hüllmaterialmagazin gemäß Fig. 1a in einer Transport-, Fahrt- bzw. Betriebsposition, die im Folgenden nur noch als Transportposition T bezeichnet wird, und in Figur 1b in einer Entnahmepostion E dargestellt wird. Figur 2, auf die nun auch Bezug genommen wird, zeigt beide Positionen, wobei die Entnahmeposition E in durchgezogenen Linien und die Transportposition T durch eine Darstellung in unterbrochenen Linien angedeutet wird.
Im Folgenden soll nun auch Figur 3 herangezogen werden, in der das wiederum bezogen auf die übliche Fahrtrichtung D des Erntebergungsgeräts 10 linksseitige Hüllmaterialmagazin 48 detaillierter dargestellt wird.
Die Hüllmaterialmagazine 48 weisen jeweils einen Träger 50 mit einer Grundplatte 52 auf. Jede Grundplatte 52 trägt eine Mehrzahl von Hüllmaterialaufnahmeeinrichtungen 54, die sich von der Grundplatte 52 senkrecht weg erstrecken. Im gezeigten Ausführungsbeispiel handelt es sich dabei um fünf Hüllmaterialaufnahmeeinrichtungen 54, welche in zwei parallelen Reihen angeordnet sind, von denen eine drei, die andere zwei Hüllmaterialaufnahmeeinrichtungen 54 aufweist. Die Hüllmaterialaufnahmeeinrichtungen 54 sind ausgebildet, um jeweils einen Hüllmaterialvorrat 44 aufzunehmen. Es sind aber auch andere Anordnungen denkbar.
Der Träger 50 weist weiter einen Lenker 56 auf, welcher einenends fest mit der Grundplatte 52 und andernends mit einem an einem bezogen auf die übliche Fahrtrichtung D des Erntebergungsgeräts 10 schräg nach nach rückwärts abfallenden Endbereich 58 der Radabdeckung 28 vorgesehenen Drehgelenk 60 verbunden ist. Der Lenker 56 schließt mit der Grundplatte 52 einen stumpfen Winkel ein.

Das Drehgelenk 60 weist eine Drehachse 62 auf, welche sich senkrecht von dem abgeschrägten Endbereich 58 nach rückwärts erstreckt und es sowohl dem Lenker 56 und somit der Grundplatte 52 mit den Hüllmaterialaufnahmeeinrichtungen 54 als auch dem Träger 50 als Ganzem erlaubt, um die Drehachse 62 zu verschwenken.

Sowohl während eines Erntebetriebs des Erntebergungsgeräts 10 als auch einer Transport- bzw. Straßenfahrt nehmen die Hüllmaterialmagazine 48 jeweils die Transportposition T oberhalb der Radabdeckungen 28 ein, wie dies in der Figur 1a und in Figur 2 in durchbrochenen Linien dargestellt wird. Die Grundplatte 52 ist in dieser Position im Wesentlichen parallel zu einer Längsachse L des Erntebergungsgeräts 10 ausgerichtet.

In der Entnahmeposition E, wie sie in Figur 1b und 3 und in der Figur 2 in durchgehenden Linien dargestellt wird, ist der Träger 50 bezogen auf die Fahrtrichtung D des Erntebergungsgeräts 10 nach rückwärts in die Entnahmeposition E verschwenkt, in der die Grundplatte 52 an die Ballenwickeleinrichtung 12 angrenzend angeordnet ist. Es ist denkbar, dass der Träger 50 in eine Stellung verschwenkt wird, in der die Hüllmaterialaufnahmeeinrichtungen 54 parallel zu der Längsachse L des Erntebergungsgeräts 10 ausgerichtet sind. Vorzugsweise nehmen sie aber gemäß der Darstellung in den Figuren 2 und 3 eine Position ein, in der sie sich bezogen auf die Längsachse L geringfügig nach außen erstrecken.

Wird das Hüllmaterialmagazin 48 bzw. der Träger 50 aus der Transportposition T in die Entnahmeposition E gebracht, so verschwenkt die mit dem Drehgelenk 60 über den Lenker 56 verbundene Grundplatte 52 um die Drehachse 62. Aufgrund der Anordnung der Drehachse 62, welche sich weder rein vertikal noch horizontal sondern bezogen auf den nach rückwärts abgeschrägten Endbereich 58 der Radabdeckung 28 senkrecht von dieser weg nach rückwärts erstreckt, beschreibt das Hüllmaterialmagazin 48 und insbesondere die Grundplatte 52 während des Schwenkvorgangs einen Bogen, der diese außen um das Erntebergungsgerät 10 bzw. dessen Seitenbereich 46 und insbesondere den Radkasten 28 herumführt. Die Grundplatte 52 gelangt aus einer horizontal ausgerichteten Stellung in der ein freier Bereich 64 der Grundplatte 52 bezogen auf die Fahrtrichtung D nach vorn zeigt und sich die Hüllmaterialaufnahmeeinrichtung 54 vertikal noch oben erstrecken, in eine im Wesentlichen vertikal ausgerichtete Stellung, in der der freie Bereich 64 der Grundplatte 52 in Richtung des Untergrunds zeigt und die Hüllmaterialaufnahmeeinrichtungen 54 im wesentlichen horizontal ausgerichtet sind und im Wesentlichen nach rückwärts zeigen.

In der Transportposition T kann das Hüllmaterialmagazin 48 mehrere Hüllmaterialvorräte 44 derart aufnehmen, dass die Hüllmaterialvorräte 44 einerseits zumindest im Wesentlichen vor Umgebungseinflüssen, die diese beschädigen könnten, bewahrt werden und andererseits nicht mit der Funktion des Erntebergungsgeräts 10 interagieren.

In der Entnahmeposition E wiederum befinden sich die Hüllmaterialvorräte 44 in einer Stellung, in der diese in einfacher Weise und insbesondere angrenzend bzw. nahe bei dem zukünftigen Verwendungsort von einer Bedienungsperson aus dem Hüllmaterialmagazin 48 entnommen bzw. von den Hüllmaterialaufnahmeeinrichtungen 54 abgenommen werden können.
Es soll angemerkt werden, dass das Verschwenken des Hüllmaterialmagazins 48 bzw. des Trägers 50 sowohl manuell als auch motorisch, beispielsweise unter Einsatz eines Hydraulikmotors, Elektromotors oder in jeder anderer geeigneten Art und Weise vorgesehen sein kann. Es ist auch denkbar, dass ein manuelles Verschwenken motorisch unterstützt oder beispielsweise durch einen Hydraulikzylinder gedämpft wird. Es ist auch ein automatisiertes und/oder gesteuertes Verschwenken denkbar.
Es kann weiter vorgesehen sein, dass das Hüllmaterialmagazin 48 bzw. der Träger 50 zumindest in der Transportposition T durch eine nicht gezeigte Sicherungseinrichtung festgelegt wird. Es ist auch denkbar, dass das Hüllmaterialmagazin 48 in dieser Position beispielsweise durch Hydraulikwirkung oder anderweitig motorisch gehalten wird. Vorzugsweise ist im Bereich der Entnahmeposition E ein nicht gezeigtes Anschlagmittel vorgesehen, welches ein Verschwenken des Hüllmaterialmagazins 48 bzw. des Trägers 50 über die gewünschte Entnahmeposition E hinaus begrenzt.

## Patentansprüche

1. Landwirtschaftliche oder industrielle Presse (10) zur Herstellung von Rundballen mit einer an die Presse (10) in einem rückwärtigen Bereich anschließbaren Ballenwickeleinrichtung (12) mit Wickelarmen (36) zum Umhüllen eines Ballens (34) mit Hüllmaterial (38), mit wenigstens einem Hüllmaterialmagazin (48), zur Mitführung eines Hüllmaterialvorrats (44) an der landwirtschaftlichen oder industriellen Presse (10), wobei das Hüllmaterialmagazin (48) einen an die Presse (10) schwenkbar anbringbaren Träger (50) umfasst, mit wenigstens einer Hüllmaterialaufnahmeeinrichtung (54) zur Aufnahme wenigstens eines Hüllmaterialvorrats (44) in der Art einer Rolle, **dadurch gekennzeichnet, dass** der Träger (50) derart ausgebildet ist, dass die Hüllmaterialaufnahmeeinrichtung (54) aus einer zumindest im Wesentlichen vertikal ausgerichteten und der Ballenwickeleinrichtung (12) abgelegenen Transportposition (T) in eine an die Ballenwickeleinrichtung (12) angrenzende Entnahmeposition (E) gebracht werden kann.

2. Landwirtschaftliche oder industrielle Presse (10) nach Anspruch 1, **dadurch gekennzeichnet, dass** die Hüllmaterialaufnahmeeinrichtung (54) in der Entnahmeposition (E) zumindest annähernd horizontal und/oder annähernd parallel zu einer Längsachse (L) des Erntebergungsgeräts (10) angeordnet ist.

3. Landwirtschaftliche oder industrielle Presse (10) nach Anspruch 1 oder 2, **dadurch gekennzeichnet, dass** der Träger (50) in der Transportposition (T) in einer erhöhten Position, zumindest im Wesentlichen oberhalb eines Radkasten (28) der Presse (10) und/oder in einem Seitenbereich (46) der Presse (10) angeordnet ist.

4. Landwirtschaftliche oder industrielle Presse (10) nach einem der Ansprüche 2 oder 3 **dadurch gekennzeichnet, dass** der Träger (50) in der Transportposition (T) zumindest im Wesentlichen parallel zu der Längsachse (L) der Presse (10) angeordnet ist.

5. Landwirtschaftliche oder industrielle Presse (10) nach einem der vorherigen Ansprüche, **dadurch gekennzeichnet, dass** der Träger (50) ausgebildet ist, um eine nicht vertikale Drehachse (62) zu verschwenken und wenigstens ein zumindest im Wesentlichen eine nicht vertikal ausgerichtete Drehachse (62) aufweisendes Drehgelenk (60) zur Anbringung an der Presse (10) aufweist, wobei der Träger (50) eine Grundplatte (52), zur Aufnahme der sich von der Grundplatte (52) zumindest im Wesentlichen senkrecht erstreckenden Hüllmaterialaufnahmeeinrichtungen (54) und einen Lenker (56) zur Verbindung der Grundplatte (52) mit dem Drehgelenk (60) aufweist, wobei der Lenker (56) mit der Grundplatte (52) einen Winkel (A) größer als 90° einschließt.

6. Landwirtschaftliche oder industrielle Presse (10) nach Anspruch 5, **dadurch gekennzeichnet, dass** die Drehachse (62) mit der Vertikalen bzw. der Horizontalen einen Winkel kleiner als 90° einschließt und/oder sich bezogen auf die Presse (10) zumindest im Wesentlichen nach rückwärts erstreckt.

7. Landwirtschaftliche oder industrielle Presse (10) nach einem der vorherigen Ansprüche, **dadurch gekennzeichnet, dass** der Träger (50) an einem bezogen auf das Erntebergungsgerät (10) nach rückwärts und unten abgeschrägten Endbereich (58) eines Gehäusebestandteils, insbesondere eines Radkastens (28) der Presse (10) anbringbar ist.

8. Landwirtschaftliche oder industrielle Presse (10) nach Anspruch 7, **dadurch gekennzeichnet, dass** die Drehachse (62) mit Bezug auf den abgeschrägten Endbereich (58) zumindest im Wesentlichen senkrecht angeordnet ist.

9. Landwirtschaftliche oder industrielle Presse (10) nach einem der vorherigen Ansprüche, **dadurch gekennzeichnet, dass** zwei Hüllmaterialmagazine (48) vorgesehen sind, die im Wesentlichen achssymmetrisch zu einer/der Längsachse (L) des Erntebergungsgeräts (10) angeordnet sind.

## Claims

1. Agricultural or industrial baler (10) for producing round bales, comprising a bale wrapping device (12) having wrapping arms (36) for wrapping a bale (34) with wrapping material (38), which bale wrapping device is connectable to the baler (10) in a rear region, having at least one wrapping-material storage unit (48), for carrying a wrapping material supply (44) on the agricultural or industrial baler (10), the wrapping-material storage unit (48) comprising a carrier (50), which is pivotably mountable on the baler (10) and having at least one wrapping-material accommodating device (54) for accommodating at least one wrapping material supply (44), in the form of a roll, **characterized in that** the carrier (50) is designed in such a way that the wrapping-material accommodating device (54) can be brought out of a transport position (T), which is oriented at least substantially vertically and is remote from the bale wrapping device (12), and into a removal position (E), which is adjacent to the bale wrapping device (12).

2. Agricultural or industrial baler (10) according to Claim 1, **characterized in that** the wrapping-material accommodating device (54) is disposed, in the removal position (E), so as to be at least approximately horizontal and/or approximately parallel to a longitudinal axis (L) of the crop harvesting device (10).

3. Agricultural or industrial baler (10) according to Claim 1 or 2, **characterized in that** the carrier (50), in the transport position (T), is disposed in a raised position, at least substantially above a wheel arch (28) of the baler (10) and/or in a side region (46) of the baler (10).

4. Agricultural or industrial baler (10) according to one of Claims 2 or 3, **characterized in that** the carrier (50), in the transport position (T), is disposed at least substantially parallel to the longitudinal axis (L) of the baler (10).

5. Agricultural or industrial baler (10) according to one of the preceding claims, **characterized in that** the carrier (50) is designed to pivot about a non-vertical axis of rotation (62) and comprises at least one rotational joint (60) for the mounting on the baler (10), said rotational joint having, at least substantially, a non-vertically oriented axis of rotation (62), wherein the carrier (50) comprises a base plate (52) for accommodating the wrapping-material accommodating devices (54), which extend at least substantially perpendicularly from the base plate (52), and a link (56) for connecting the base plate (52) to the rotational joint (60), wherein the link (56) encloses an angle (A) greater than 90° with the base plate (52).

6. Agricultural or industrial baler (10) according to Claim 5, **characterized in that** the axis of rotation (62) encloses an angle of less than 90° with the vertical line or the horizontal line and/or extends at least substantially backward with respect to the baler (10).

7. Agricultural or industrial baler (10) according to one of the preceding claims, **characterized in that** the carrier (50) can be mounted at an end region (58) of a housing component, in particular a wheel arch (28) of the baler (10), which end region (58) is slanted backward and downward with respect to the crop harvesting device (10).

8. Agricultural or industrial baler (10) according to Claim 7, **characterized in that** the axis of rotation (62) is disposed at least substantially perpendicularly with respect to the slanted end region (58).

9. Agricultural or industrial baler (10) according to one of the preceding claims, **characterized in that** two wrapping-material storage units (48) are provided, which are disposed substantially axially symmetrical with respect to a/the longitudinal axis (L) of the crop harvesting device (10).

## Revendications

1. Presse agricole ou industrielle (10) pour la fabrication de balles rondes, comprenant un dispositif d'enroulement de balle (12) pouvant être raccordé à la presse (10) dans une région arrière, avec des bras d'enroulement (36) destinés à envelopper une balle (34) avec un matériau d'enveloppement (38), comprenant au moins un magasin de matériau d'enveloppement (48), avec entraînement d'une réserve de matériau d'enveloppement (44) au niveau de la presse agricole ou industrielle (10), le magasin de matériau d'enveloppement (48) comprenant un support (50) pouvant être monté de manière pivotante sur la presse (10), avec au moins un dispositif de réception de matériau d'enveloppement (54) pour recevoir au moins une réserve de matériau d'enveloppement (44) sous la forme d'un rouleau, **caractérisée en ce que** le support (50) est réalisé de telle sorte que le dispositif de réception de matériau d'enveloppement (54) puisse être amené d'une position de transport (T) orientée au moins essentiellement verticalement et éloignée du dispositif d'enroulement de balle (12) dans une position de prélèvement (E) adjacente au dispositif d'enroulement de balle (12).

2. Presse agricole ou industrielle (10) selon la revendication 1, **caractérisée en ce que** le dispositif de réception de matériau d'enveloppement (54) est disposé dans la position de prélèvement (E) au moins approximativement horizontalement et/ou au moins approximativement parallèlement à un axe longitudinal (L) de l'appareil de collecte de récolte (10).

3. Presse agricole ou industrielle (10) selon la revendication 1 ou 2, **caractérisée en ce que** le support (50) est disposé dans la position de transport (T) dans une position rehaussée, au moins essentiellement au-dessus d'un caisson de roue (28) de la presse (10) et/ou dans une région latérale (46) de la presse (10) .

4. Presse agricole ou industrielle (10) selon l'une quelconque des revendications 2 ou 3, **caractérisée en ce que** le support (50), dans la position de transport (T), est disposé au moins essentiellement parallèlement à l'axe longitudinal (L) de la presse (10) .

5. Presse agricole ou industrielle (10) selon l'une quelconque des revendications précédentes, **caractérisée en ce que** le support (50) est réalisé de manière à pivoter autour d'un axe de rotation non vertical (62) et présente au moins une articulation pivotante (60) présentant au moins essentiellement un axe de rotation (62) orienté non verticalement pour le montage sur la presse (10), le support (50) présentant une plaque de base (52) pour recevoir les dispositifs de réception de matériau d'enveloppement (54) s'étendant au moins essentiellement verticalement depuis la plaque de base (52) et un bras oscillant (56) pour la connexion de la plaque de base (52) à l'articulation pivotante (60), le bras oscillant (56) formant avec la plaque de base (52) un angle (A) supérieur à 90°.

6. Presse agricole ou industrielle (10) selon la revendication 5, **caractérisée en ce que** l'axe de rotation (62) forme avec la verticale ou avec l'horizontale un angle inférieur à 90° et/ou s'étend par rapport à la presse (10) au moins essentiellement vers l'arrière.

7. Presse agricole ou industrielle (10) selon l'une quelconque des revendications précédentes, **caractérisée en ce que** le support (50) peut être monté au niveau d'une région d'extrémité (58) d'un constituant de boîtier, en particulier d'un caisson de roue (28) de la presse (10), orientée en biais vers l'arrière et vers le bas par rapport à l'appareil de collecte de récolte (10).

8. Presse agricole ou industrielle (10) selon la revendication 7, **caractérisée en ce que** l'axe de rotation (62) est disposé au moins essentiellement verticalement par rapport à la région d'extrémité (58) orientée en biais.

9. Presse agricole ou industrielle (10) selon l'une quelconque des revendications précédentes, **caractérisée en ce que** deux magasins de matériau d'enveloppement (48) sont prévus, lesquels sont disposés essentiellement avec une symétrie axiale par rapport à un axe longitudinal ou à l'axe longitudinal (L) de l'appareil de collecte de récolte (10).
